# EUROPÄISCHE PATENTANMELDUNG

(11) **EP 3 293 678 A1**
(43) Veröffentlichungstag der Anmeldung: **14.03.2018**
(21) Anmeldenummer: 17001478.1
(22) Anmeldetag: 04.09.2017
(51) Int. Cl.: G06K 19/077

(54) **SICHERHEITSSIEGEL**

(30) Priorität: 08.09.2016 DE 102016010916
(71) Anmelder: Giesecke+Devrient Mobile Security GmbH, 81677 München (DE)
(72) Erfinder: Baldischweiler, Michael, 81825 München (DE); Scharf, Jörn Frederik, 81825 München (DE)

(57) **Zusammenfassung**

Die vorliegende Erfindung ist gerichtet auf ein Sicherheitssiegel zum überprüfbaren Verschließen eines Gegenstands, anhand dessen beispielsweise mittels eines Lesegeräts festgestellt werden kann, ob dieses Siegel auch tatsächlich sicher verschlossen ist. Die vorliegende Erfindung ist ferner gerichtet auf ein entsprechendes Verfahren zum Herstellen des Sicherheitssiegels sowie auf ein Computerprogrammprodukt mit Steuerbefehlen, welche das vorgeschlagene Verfahren implementieren.

## Beschreibung

Die vorliegende Erfindung ist gerichtet auf ein Sicherheitssiegel zum überprüfbaren Verschließen eines Gegenstands, anhand dessen beispielsweise mittels eines Lesegeräts festgestellt werden kann, ob dieses Siegel auch tatsächlich sicher verschlossen ist. Die vorliegende Erfindung ist ferner gerichtet auf ein entsprechendes Verfahren zum Herstellen des Sicherheitssiegels sowie auf ein Computerprogrammprodukt mit Steuerbefehlen, welche das vorgeschlagene Verfahren implementieren.

DE 10 2014 014913 B3 zeigt eine Plombe zur Sicherung von Waren, wobei die Plombe einen ersten Abschnitt mit einem Verbindungselement, einen zweiten Abschnitt mit einem Aufnahmeelement zur Aufnahme zumindest eines Teils des Verbindungselements und eine Dateneingabeeinheit aufweist.

EP 2 329 482 B1 zeigt ein Siegel, welches einen flexiblen Streifen, einen an einem Ende des besagten flexiblen Streifens angeordneten Körper, ein Gehäuse und ein Zwischenstück aufweist.

Aus dem Stand der Technik sind Versiegelungstechniken, wie beispielsweise Plomben, welche dazu geeignet sind, einen Gegenstand, beispielsweise ein Behältnis, einen Container, ein Gefäß oder eine Tür zu versiegeln. Solche Sicherheitssiegel werden an dem jeweiligen Gegenstand angebracht und verhindern, dass dieser Gegenstand geöffnet wird, oder zeigen zumindest an, dass der Gegenstand geöffnet wurde.

Um an der Plombe bzw. dem Siegel Information zu hinterlegen, ist es bereits bekannt, elektronische Siegel, welche beispielsweise einen RFID-Chip aufweisen, vorzusehen. Somit ist es gemäß herkömmlicher Verfahren möglich, dass mittels eines Lesegeräts eine Identifikation des entsprechenden Chips und somit der Plombe auslesbar ist. Hierbei ist es jedoch nachteilig, dass mittels der vorgeschlagenen Lesegeräte lediglich festgestellt werden kann, ob tatsächlich ein Chip vorhanden ist, ohne hierbei darauf zu achten, ob das entsprechende Siegel auch tatsächlich ordnungsgemäß angebracht ist.

So ist es gemäß dem herkömmlichen Stand der Technik nachteilig, dass ein Unberechtigter sich Zugriff zu dem versiegelten bzw. verschlossenen Gegenstand verschaffen kann und hierbei das Siegel nicht komplett entfernt, was jedoch maschinell nicht erkannt wird. Bei einem maschinellen Auslesen würde das entsprechende Lesegerät somit identifizieren, dass das Siegel tatsächlich vorhanden ist, und eine positive Rückmeldung liefern. So könnte der Angreifer das Siegel gebrochen an dem Gegenstand zurückliegen lassen, ohne dies örtlich zu entfernen. Somit gibt das Lesegerät lediglich darüber Aufschluss, dass das Siegel am Gegenstand tatsächlich vorhanden ist, nicht aber, ob das Siegel tatsächlich auch verschlossen ist.

Somit ist es besonders nachteilig, dass angebrachte Siegel bzw. Plomben gemäß herkömmlicher Verfahren tatsächlich manuell, d. h. mittels einer optischen Kontrolle eines Personals, überprüft werden müssen. Dies ist insbesondere bei einer großen Anzahl von Siegeln nachteilig, da das Sicherheitspersonal alle Siegel abgehen und kontrollieren muss, ohne dass es hierbei möglich ist, dies automatisch mittels eines Lesegeräts zu veranlassen.

Es ist somit eine Aufgabe der vorliegenden Erfindung, ein Sicherheitssiegel bereitzustellen, welches es erlaubt, mittels eines entsprechend eingerichteten Lesegeräts festzustellen, ob das Siegel geöffnet oder verschlossen ist. Hierbei ist es notwendig, das Siegel mit geringem technischen Aufwand bereitzustellen, derart, dass dies zu einem angemessenen Preis in großer Stückzahl einfach hergestellt werden kann. Es ist ferner eine Aufgabe der vorliegenden Erfindung, ein entsprechendes Verfahren vorzuschlagen, welche das Sicherheitssiegel bereitstellt. Ferner ist es eine Aufgabe der vorliegenden Erfindung, ein Computerprogrammprodukt mit Steuerbefehlen bereitzustellen, welche das vorgeschlagene Verfahren implementieren.

Die Aufgabe wird gelöst mittels eines Sicherheitssiegels gemäß dem Patentanspruch 1. Weitere vorteilhafte Ausgestaltungen sind in den Unteransprüchen angegeben.

Demgemäß wird ein Sicherheitssiegel zum überprüfbaren Verschließen eines Gegenstands vorgeschlagen, aufweisend einen Siegelkörper mit einer ersten Antenne und einer Recheneinheit, wobei sich aus dem Siegelkörper zwei Verschlussstreifen, aufweisend je einen Teil einer zweiten Antenne, welche an die Recheneinheit gekoppelt ist, erstrecken, wobei in Abhängigkeit eines Bereitstellens mindestens eines Signals der ersten Antenne und/ oder der zweiten Antenne an die Recheneinheit feststellbar ist, ob das Sicherheitssiegel verschlossen ist.

Bei dem vorgeschlagenen Sicherheitssiegel handelt es sich beispielsweise um ein bandartiges Siegel, welches einen Siegelkörper in irgendeiner Form aufweist. Diese Form kann also kubisch, rund oder auch länglich sein. Eine längliche Ausgestaltung des Siegelkörpers hat hierbei den Vorteil, dass dieser Kartenkörper mit weiteren Bauelementes des Sicherheitssiegels einstückig oder zumindest formschlüssig bereitgestellt werden kann. So weist das vorgeschlagene Sicherheitssiegel auch zwei Verschlussstreifen auf, die bandartig, schnurartig oder ganz allgemein länglich ausgestaltet sind.

Die vorgeschlagenen Verschlussstreifen können beispielsweise den abzuschließenden Gegenstand derart umschließen, dass dieser eben versiegelt wird. Hierbei sind typischerweise an den Gegenständen entsprechende Hilfseinrichtungen, wie z. B. Ösen oder Schlaufen, vorgesehen. So kann beispielsweise ein Container als ein abzuschließender Gegenstand eine Hilfseinrichtung derart aufweisen, dass zwei formgleiche Bauelemente aufeinander zu liegen kommen, welche eine Durchbohrung aufweisen. Somit können die beiden Verschlussstreifen durch diese Bohrung hindurchgeführt werden und beispielsweise an dem Siegelkörper fixiert werden. Somit werden die beiden Hilfseinrichtungen gegeneinander fixiert, und ein Öffnen des Containers ist nicht mehr möglich. Der Container kann lediglich dann geöffnet werden, wenn beispielsweise die Verschlussstreifen durchtrennt werden.

Um die Verschlussstreifen derart zu fixieren, dass das Sicherheitssiegel verschlossen wird, kann auch an dem Kartenkörper eine weitere Hilfseinrichtung vorgesehen sein. Hierbei kann es sich beispielsweise ebenfalls um eine Öffnung handelt, durch die die Verschlussstreifen hindurchgeführt und arretiert werden. Dies kann beispielsweise dem Prinzip eines Kabelbinders ähneln. Die Bauart eines Kabelbinders kann allgemein als ein Verschlussstreifen beschrieben werden, der durch eine Arretierungsöffnung des Kabelbinders hindurchgeführt wird. In gleicher Bauart kann das vorgeschlagene Sicherheitssiegel implementiert werden, wobei jedoch erfindungsgemäß zwei Verschlussstreifen vorgesehen sind.

Ganz allgemein gilt das Sicherheitssiegel dann als verschlossen, falls die Verschlussstreifen beispielsweise an dem Siegelkörper oder einer entsprechenden Hilfseinrichtung fixiert sind. Typischerweise ist dies derjenige Modus, in dem der zu verschließende Gegenstand durch die Verschlussstreifen umschlungen ist. Dieses Umschlingen kann jedoch auch zu Testzwecken vermieden werden, wodurch also auch feststellbar ist, dass das Sicherheitssiegel verschlossen ist, ohne dass ein Gegenstand tatsächlich abgeschlossen sein muss. Somit umfasst das Sicherheitssiegel generell die Eignung zum überprüfbaren Verschließen eines Gegenstands.

Weiter wird vorgeschlagen, dass das Sicherheitssiegel eine erste Antenne und eine Recheneinheit aufweist. So umfasst das Sicherheitssiegel einen Kartenkörper, der derart ausgestaltet ist, dass eine Antenne, typischerweise eine Induktionsspule, in dem Siegelkörper verbaut ist. Die Antenne ist eingerichtet, ein entsprechendes Signal zu empfangen und dieses an die Recheneinheit weiterzuleiten. Bei der Recheneinheit kann es sich um ein elektronisches Bauelement handeln, welches z. B. als Mikrokontroller ausgestaltet ist. So kann der Siegelkörper aus einem Kunststoff gefertigt werden und die metallische erste Antenne umschließen. Erfindungsgemäß wird jedoch auch eine zweite Antenne, welche ebenfalls mit der Recheneinheit kommunikativ verbunden ist. So kann das Sicherheitssiegel derart aufgebaut sein, dass beispielsweise auf der einen Seite der Recheneinheit die erste Antenne angebracht ist und auf der zweiten Seite der Recheneinheit die zweite Antenne angebracht ist.

Generell impliziert das Vorliegen von Verschlussstreifen, dass diese Streifen eben länglich ausgestaltet sind, wodurch sich auch eine bevorzugte Ausführungsform der zweiten Antenne ergibt, da die zweite Antenne somit eine großflächige Angriffsfläche für ein entsprechendes Kommunikationsgerät bietet. Wird beispielsweise das Sicherheitssiegel mittels eines Signals von einem Lesegerät beaufschlagt, so ist es erfindungsgemäß möglich, dass die zweite Antenne in einem geöffneten Zustand dem Lesegerät eine große Fläche bietet, und somit das Signal mittels der länglichen Antenne, welche in die Verschlussstreifen integriert ist, empfangen werden kann.

Wird hingegen das Sicherheitssiegel verschlossen, so wird die zweite Antenne, da sie in den zwei Verschlussstreifen integriert ist, um den zu verschließenden Gegenstand herumgeschlungen, wodurch sich die Angriffsfläche des Lesegeräts verringert. Somit ist es generell möglich, dass die zweite Antenne in einem geöffneten Zustand eine größere Signalstärke empfangen kann, als in einem geschlossenen Zustand. Dies ist der Fall, da die Verschlussstreifen mitsamt der zweiten Antenne im geöffneten Zustand in einer zweidimensionalen Ebene angeordnet werden, die aus Sicht eines Lesegeräts die größtmögliche Fläche einer Beaufschlagung eines Impulses, ausgesendet durch das Lesegerät, bietet.

Ferner ist es möglich, dass das Sicherheitssiegel von einem unberechtigten Angreifer durchtrennt wird. Dies ist lediglich derart möglich, dass die Verschlussstreifen durchtrennt werden. In einem Ausnahmefall kann auch der Kartenkörper an sich durchtrennt werden, was jedoch tatsächlich unwahrscheinlich ist, da der Kartenkörper vorzugsweise kompakt und bezüglich der Verschlussstreifen klein ausgeformt ist. Auch hierbei würde die erste Antenne in dem Kartenkörper durchtrennt werden, was mittels der Recheneinheit aufgespürt werden kann. Wird also nunmehr die zweite Antenne durchtrennt, so kann ebenfalls mittels eines Lesegeräts festgestellt werden, dass das Sicherheitssiegel geöffnet wurde. Hierzu sind die Verschlussstreifen mitsamt der zweiten Antenne derart auszugestalten, dass sich die zweite Antenne im Wesentlichen über die gesamte Länge der Verschlussstreifen erstreckt. Wird nunmehr der Verschlussstreifen bzw. mindestens ein Verschlussstreifen durchtrennt, so ist die zweite Antenne in ihrer Funktion stark beeinträchtigt, und das zurückgelieferte Signal an die Recheneinheit weist lediglich eine geringe Stärke auf oder ist gar nicht durch die Recheneinheit feststellbar. Somit kann also die Recheneinheit identifizieren, dass die Verschlussstreifen durchtrennt wurden.

Ferner ist es möglich, dass die übermittelten Signale der ersten Antenne bzw. der zweiten Antenne einen Hinweis auf die Öffnung oder das Schließen des Sicherheitssiegels geben. So ist es beispielsweise möglich, dass, sobald die zweite Antenne ausgestreckt oder eben nicht durchtrennt ist, diese ein Signal an die Recheneinheit nach einem Initiieren durch ein Lesegerät liefert. Hierbei kann die Recheneinheit feststellen, dass die zweite Antenne tatsächlich dieses Signal geliefert hat und somit intakt sein muss. Somit kann dies als ein geöffneter Zustand interpretiert werden, da die Antenne vollständig ausgestreckt ist und eine größtmögliche Signalstärke liefert. Ferner ist es auch möglich, mittels dieses Signals ein weiteres Signal der ersten Antenne zu überlagern. Somit kann das Signal der ersten Antenne ausgeblendet werden, solange die zweite Antenne eben dieses Signal an die Recheneinheit übermittelt.

Ferner ist es auch möglich, dass bei einem Initiieren einer Signalübermittlung innerhalb des Sicherheitssiegels, wiederum initiiert durch ein Lesegerät, beide Antennen, also die erste Antenne und die zweite Antenne, jeweils ein Signal an die Recheneinheit übermitteln. Hierbei ist es möglich, die Signale der beiden Antennen gegenpolig derart auszugestalten, dass diese sich im Wesentlichen eliminieren können. Somit kann also, sobald ein Lesegerät angelegt wird, festgestellt werden, dass in keinem Falle ein positiver Strom fließt bzw. ein Signal nicht bereitgestellt wird. Dies kann dann der Fall sein, falls beide Signale, also das Signal der ersten Antenne und das Signal der zweiten Antenne, im Betrag gleich ausgestaltet sind, sich jedoch in ihrem Vorzeichen unterscheiden. Der Fachmann kennt hierbei Mittel, wie er die konkrete Form der jeweiligen Antennen derart ausgestaltet, dass sich die Beträge der Signalstärke gleichen.

Wird wiederum das Sicherheitssiegel manipuliert, so resultiert dies in einer Veränderung entweder der Ausrichtung der Antenne oder auch der Länge der Antenne, da diese beispielsweise durchtrennt wird. Somit stimmen eben nicht mehr die beiden Beträge der beiden Antennen überein, und dies kann mittels der Recheneinheit identifiziert werden. Somit kann also die Recheneinheit feststellen, dass ein nicht erwartetes Signal auftritt und somit eine Manipulation, insbesondere ein Öffnen des Sicherheitssiegels, vorliegt.

Somit wurden Metriken vorgestellt, welche darlegen, wie die Recheneinheit in Abhängigkeit eines Signals einer Antenne oder aber auch mehrere Signale von beiden Antennen feststellen kann, ob eine Manipulation des Sicherheitssigels vorliegt. Diese Metriken können beispielsweise während des Herstellungsprozesses in der Recheneinheit eincodiert werden. Vorzugsweise können diese Regeln auch hardcordiert in die Recheneinheit, also fest verdrahtet, eingebracht werden. Da generell mehrere Regeln vorliegen können, obliegt es dem Hersteller, die entsprechende auszuwählen und in der Recheneinheit zu verankern. Somit ist es auch einem Angreifer nicht von vornherein möglich, genau zu wissen, welche Regeln nunmehr tatsächlich implementiert sind. Ferner kennt der Fachmann weitere Möglichkeiten; wie er die Recheneinheit bzw. die beiden Antennen ausgestalten kann, um den erfindungsgemäßen technischen Effekt herbeizuführen.

Gemäß einem Aspekt der vorliegenden Erfindung erzeugt die zweite Antenne lediglich in einem offenen Zustand ein Signal. Dies hat den Vorteil, dass, falls das Sicherheitssiegel geöffnet ist, somit auch die zweite Antenne ein Signal übermittelt, wodurch es der Recheneinheit generell möglich ist, festzustellen, ob das Sicherheitssiegel geöffnet bzw. manipuliert oder geschlossen ist.

Gemäß einem weiteren Aspekt der vorliegenden Erfindung sind die erste und die zweite Antenne zueinander gegenpolig ausgestaltet. Dies hat den Vorteil, dass das Signal der ersten Antenne das Signal der zweiten Antenne auslöschen kann bzw. das Signal der zweiten Antenne das Signal der ersten Antenne auslöscht. Unter einem Auslöschen eines Signals kann vorliegend verstanden werden, dass die Signale sich gegenseitig zumindest dämpfen bzw. sich bei einem Überlagern eliminieren.

Gemäß einem weiteren Aspekt der vorliegenden Erfindung ist die Recheneinheit eingerichtet, bei einem Empfangen eines Signals der zweiten Antenne kein Signal der ersten Antenne entgegenzunehmen. Dies hat den Vorteil, dass in die Recheneinheit ein Signal der zweiten Antenne eingespeist werden kann, derart, dass, falls die zweite Antenne ein Signal übersendet, das Signal der ersten Antenne ausgeblendet werden kann. Dies kann beispielsweise derart erfolgen, dass bei einem Empfang eines Impulses der zweiten Antenne die Recheneinheit nicht eingerichtet ist, einen weiteren Impuls bzw. ein weiteres Signal aufzunehmen. Somit kann die Recheneinheit stets überprüfen, ob die zweite Antenne intakt ist und stets ein Signal sendet. Von dieser Information kann die Recheneinheit ableiten, dass die zweite Antenne intakt ist und somit keinerlei Manipulationen stattgefunden haben.

Gemäß einem weiteren Aspekt der vorliegenden Erfindung ist die zweite Antenne eingerichtet, das Signal der ersten Antenne im Wesentlichen zu eliminieren. Dies hat den Vorteil, dass mit einfachen technischen Mitteln das Signal der ersten Antenne überlagert werden kann, derart, dass sich die Signale gegenseitig im Wesentlichen invers entsprechen.

Gemäß einem weiteren Aspekt der vorliegenden Erfindung erzeugt bei einem Schließen des Sicherheitssiegels mittels der Verschlussstreifen die zweite Antenne im Vergleich zu einem geöffneten Zustand eine geringere Signalintensität. Dies hat den Vorteil, dass anhand der Signalintensität mittels der Recheneinheit festgestellt werden kann, ob das Sicherheitssiegel geöffnet bzw. manipuliert oder geschlossen ist. Somit kann auch in Abhängigkeit der Signalintensität mittels eines Lesegeräts ausgelesen werden, ob das Sicherheitssiegel geschlossen ist. Ebenfalls eine geringere Signalintensität wird erzeugt, falls die zweite Antenne manipuliert bzw. der Verschlussstreifen durchtrennt ist. Somit kann wiederum eine Manipulation bzw. ein Durchtrennen der Verschlussstreifen erkannt werden.

Gemäß einem weiteren Aspekt der vorliegenden Erfindung erzeugt die zweite Antenne bei einem Durchtrennen im Wesentlichen kein Signal. Dies hat den Vorteil, dass, da die zweite Antenne mit dem bzw. den Sicherheitsstreifen verbunden ist, kein zerstörungsfreies Lösen des Sicherheitsstreifens erfolgen kann, ohne dass hierbei auch die zweite Antenne beschädigt wird. Somit ist die zweite Antenne nicht mehr funktionstüchtig bzw. liefert nur eine äußerst geringe Signalstärke. Dies ermöglicht es der Recheneinheit zu ermitteln, ob die zweite Antenne eine zu erwartende Stromstärke bzw. Signalstärke liefert, oder aber ob die zweite Antenne und somit implizit die Verschlussstreifen beschädigt sind. Liefert die zweite Antenne generell keinen Strom bzw. kein Signal, so erkennt die Recheneinheit ein Durchtrennen bzw. zumindest ein Manipulieren der zweiten Antenne.

Gemäß einem weiteren Aspekt der vorliegenden Erfindung ist das Sicherheitssiegel als ein Verschlusssiegel, ein Kabelbinder-Verschlusssiegel oder eine Plombe ausgestaltet. Dies hat den Vorteil, dass die vorliegende Erfindung in einer Vielzahl von Anwendungsszenarien eingesetzt werden kann. So implizieren die einzelnen Ausgestaltungen gewisse Bauarten, wobei jedoch eine Ausgestaltung als eine Art eines erweiterten Kabelbinders bevorzugt ist. Dies stellt insbesondere auf eine längliche Ausgestaltung ab, bei der die Verschlussstreifen um einen zu verschließenden Gegenstand gewickelt oder geschlungen werden und beispielsweise am Siegelkörper fixiert werden. Generell erkennt der Durchschnittsfachmann jedoch, dass die vorliegende Erfindung nicht auf dieses Ausführungsbeispiel beschränkt ist, sondern dass auch weitere Bauarbeiten den erfindungsgemäßen technischen Effekt hervorbringen.

Gemäß einem weiteren Aspekt der vorliegenden Erfindung liegt die Recheneinheit als ein Mikroprozessor, ein Mikrokontroller, ein Elektronikbaustein und/oder zumindest als ein Teil eines Transponders vor. Dies hat den Vorteil, dass die Recheneinheit gemäß bekannter Komponenten ausgestaltet werden kann und insbesondere bestehende Komponenten Wiederverwendung finden können. So kann generell das vorgeschlagene Sicherheitssiegel als ein Transponder bezeichnet werden, da es entsprechende Antennen und eine Recheneinheit aufweist.

Gemäß einem weiteren Aspekt der vorliegenden Erfindung handelt es sich bei den Antennen um Ultra-Hoch-Frequenz-Antennen. Dies hat den Vorteil, dass erprobte Techniken erfindungsgemäß Einsatz finden können. So kann die vorliegende Erfindung auch als ein Bereitstellen eines UHF-Sicherheitssiegels bezeichnet werden. Generell lässt sich das vorgeschlagene Sicherheitssiegel auch als ein RFID-Chip implementieren. Hierbei ist es besonders vorteilhaft, dass bereits entsprechende Infrastrukturen mitsamt Lesegeräten bekannt und erhältlich sind. Somit lässt sich die vorgeschlagene Erfindung nahtlos in eine bestehende Anordnung integrieren. Dies ermöglicht die Realisierung der vorliegenden Erfindung mit geringen technischen Mitteln.

Gemäß einem weiteren Aspekt der vorliegenden Erfindung weist der Siegelkörper eine Aufnahmeeinrichtung zur Fixierung der Verschlussstreifen auf. Dies hat den Vorteil, dass die Verschlussstreifen mittels der Aufnahmeeinrichtung derart fixiert werden können, dass die Verschlussstreifen das abzuschließende Element bzw. den Gegenstand umgreifen bzw. umschlingen können und ferner in der Aufnahmeeinrichtung arretiert bzw. fixiert werden können. Hierbei ist die Aufnahmeeinrichtung in technisch einfacher Weise bereitzustellen, da lediglich eine Bohrung bzw. in Durchlass in dem Siegelkörper derart implementiert werden muss, dass die Verschlussstreifen fixierbar sind. Hierbei ist die Aufnahmeeinrichtung derart auszugestalten, dass die Verschlussstreifen entweder unlösbar oder aber auch lösbar fixiert werden können. Werden die Verschlussstreifen unlösbar fixiert, so handelt es sich um ein Einweg-Sicherheitssiegel, welches nach einem Ablösen unbrauchbar bzw. zerstört wird. Sind die Verschlussstreifen lösbar mittels der Aufnahmeeinrichtung fixiert, so kann das Sicherheitssiegel auch abgenommen werden, was erfindungsgemäß wie beschrieben detektiert werden kann. Das Sicherheitssiegel kann dann an einem anderen zu sichernden Gegenstand angebracht werden.

Gemäß einem weiteren Aspekt der vorliegenden Erfindung erfolgt das Schließen des Sicherheitssiegels mechanisch mittels eines Ferrits und/oder elektromagnetisch. Dies hat den Vorteil, dass das Sicherheitssiegel mit technisch einfachen Mitteln geschlossen werden kann.

Gemäß einem weiteren Aspekt der vorliegenden Erfindung ist das Sicherheitssiegel nicht zerstörungsfrei zu öffnen. Dies hat den Vorteil, dass bei Ausgestaltungen, bei denen mittels der Antennensignale lediglich eine Zerstörung detektierbar ist, auch überprüfbar ist, ob eine Manipulation des Sicherheitssiegels vorliegt. So kann das Sicherheitssiegel beispielsweise derart ausgestaltet werden, dass lediglich ein Durchtrennen der zweiten Antenne detektierbar ist, nicht aber ein Öffnen des Sicherheitssiegels. Dies stellt insbesondere darauf ab, dass das Sicherheitssiegel auch wiederverwendbar ausgestaltet werden kann und somit lediglich zu überprüfen ist, ob das Sicherheitssiegel bei einem Abnehmen zerstört wurde. Ein Zerstören des Sicherheitssiegels tritt insbesondere dann auf, wenn die zweite Antenne zumindest teilweise durchtrennt ist.

Die Aufgabe wird auch gelöst durch ein Verfahren zum Herstellen eines Sicherheitssiegels zum überprüfbaren Verschließen eines Gegenstands, aufweisend ein Bereitstellen eines Siegelkörpers mit einer ersten Antenne und eine Recheneinheit, wobei ein Ausformen von zwei Verschlussstreifen vorgesehen ist, die sich aus dem Siegelkörper, aufweisend je einen Teil einer zweiten Antenne, welche an die Recheneinheit gekoppelt ist, erstrecken, wobei in Abhängigkeit eines Bereitstellens mindestens eines Signals der ersten Antenne und/ oder der zweiten Antenne an die Recheneinheit festgestellt wird, ob das Sicherheitssiegel verschlossen ist.

Die Aufgabe wird auch gelöst durch ein Computerprogrammprodukt mit Steuerbefehlen, welche das vorgeschlagene Verfahren implementieren.

Erfindungsgemäß ist es besonders vorteilhaft, dass das vorgeschlagenen Verfahren dem Herstellen des vorgeschlagenen Sicherheitssiegels dient und somit die strukturellen Merkmale des Sicherheitssiegels auch als Verfahrensschritte implementiert werden können. So kann bezüglich jedem strukturellen Merkmal mindestens ein Verfahrensschritt vorgesehen werden, der eben dieses strukturelle Merkmal bereitstellt bzw. implementiert. Ferner ist das Computerprogrammprodukt geeignet, das Verfahren zu implementieren, und weist somit die Verfahrensschritt in Form von Steuerbefehlen auf. Ferner lassen sich teilweise die technischen Konzepte von strukturellen Merkmalen auch mittels Steuerbefehlen realisieren.

Weitere vorteilhafte Ausgestaltungen werden nun anhand der beigefügten Figuren näher erläutert. Es zeigen:
- Fig. 1:: ein schematischer Aufbau eines Siegels zum Verschließen einer Box als ein Ausgangspunkt für die vorliegende Erfindung;
- Fig. 2:: ein schematisches Abbild eines Sicherheitssiegels zum Überprüfen eines Verschlusses eines Gegenstands gemäß einem Aspekt der vorliegenden Erfindung; und
- Fig. 3:: ein schematisches Ablaufdiagramm eines Verfahrens zum Herstellen eines Sicherheitssiegels gemäß einem Aspekt der vorliegenden Erfindung.

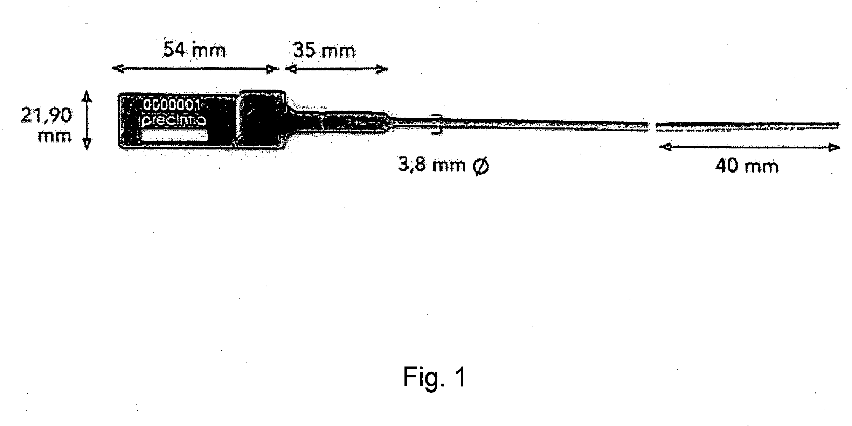

Fig. 1 zeigt ein herkömmliches Siegel, welches auf der linken Seite einen Siegelkörper aufweist und auf der rechten Seite einen einzelnen Verschlussstreifen. Hiermit ist es generell nicht möglich, ein bestehendes Ultrahochfrequenzsiegel bereitzustellen, derart, dass ein sicherer Verschluss angezeigt wird. Das UHF-Siegel meldet immer, dass das Siegel sich im gemessen UHF-Umfeld befindet. Ob das Siegel wirklich an der Box verschlossen wurde, ist nur mit Hilfe einer optischen Kontrolle, also durch eine Person, möglich. Ausgehend von dem Siegel gemäß Fig.1 soll nunmehr ein verbessertes Siegel vorgeschlagen werden, das selbsttätig, also automatisch, erkennt, ob das Siegel mechanisch geschlossen ist oder ob es eine Unterbrechung im mechanischen Verschluss gibt.

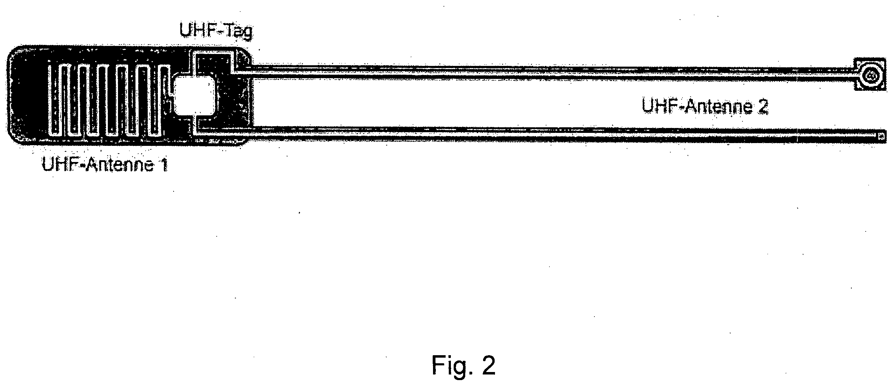

Fig. 2 zeigt ein Sicherheitssiegel zum überprüfbaren Verschließen eines Gegenstands, aufweisend einen Siegelkörper auf der linken Seite mitsamt einer ersten Antenne, vorwiegend als UHF-Antenne 1 gekennzeichnet. Ferner ist eine Recheneinheit vorgesehen, die als UHF-Tag dargestellt ist. Bei diesem UHF-Tag kann es sich um einen Mikrocontroller handeln, der beispielsweise mitsamt den Antennen einen Transponder ausformt. Aus dem Siegelkörper ragen rechts zwei Verschlussstreifen heraus, die je einen Teil einer zweiten Antenne, vorwiegend als UHF-Antenne 2 bezeichnet, aufweisen. Diese zweite Antenne ist ebenfalls an die Recheneinheit bzw. an das UHF-Tag gekoppelt. In Abhängigkeit eines Bereitstellens mindestens eines Signals der ersten Antenne auf der linken Seite und/ oder der zweiten Antenne auf der rechten Seite an die Recheneinheit ist nunmehr feststellbar, ob das Sicherheitssiegel geschlossen ist. Dies kann vorwiegend beispielsweise derart festgestellt werden, dass die Verschlussstreifen elektromagnetisch geschlossen werden und hierzu beispielsweise einen Stromkreis schließen. Der Fachmann kennt hierbei weitere vorteilhafte Ausgestaltungen, wie die Recheneinheit ein Öffnen oder Schließen des Sicherheitssiegels erkennt.

Gemäß einem Aspekt der vorliegenden Erfindung wird ein Verschluss in zwei Hälften aufgeteilt, also zwei ähnlich ausgeformte Teile. Der Sperrmechanismus wird vom Verschluss, wie er in Abbildung 1 gezeigt ist, auf die eine Hälfte des Verschlusses gelegt, wie dies in Abbildung 2 gezeigt ist. Diese zwei Halbverschlüsse bilden eine zweite Antenne für den UHF-Tag. Vorzugsweise sind diese beiden Antennen, also UHF-Antenne 1 und UHF-Antenne 2, gegenpolig ausgelegt. Ist die UHF-Antenne 2 offen, wird das eingekoppelte Signal auf das Signal vom UHF-Tag aufgelegt. Optimalerweise sieht das UHF-Tag nun keinerlei Signale mehr, bzw. das Signal ist derart schwach, dass das Tag nicht mehr funktionsfähig ist. Somit weist das vorgeschlagene Sicherheitssiegel einen Verschluss bestehend aus zwei Hälften bzw. aus zwei Verschlussstreifen auf.

Ferner kann mit der UHF-Antenne 2 eine zweite Spannung gewonnen werden. Diese wird von der Spannung abgezogen, die von der UHF-Antenne 1 generiert wird. In diesem Fall kann das UHF-Tag nicht anlaufen, da keine bzw. nur eine negative Spannung am UHF-Tag anliegt. Wird nun der Verschluss an der UHF-Antenne 2 geschlossen, wird das Antennenverhalten aufgelöst. Die Schließung der beiden Antennenhälften kann mechanisch, über einen Ferrit bzw. elektromagnetisch erfolgen. Somit kann keine Energiegewinnung bzw. Feldauslöschung am UHF-Tag mehr erfolgen. Der Chip arbeitet nun ordnungsgemäß, und es kann ohne optische Inspektion erkannt werden, ob das Siegel geschlossen ist oder nicht. Erfolgt ein mechanischer Bruch in der UHF-Antenne 1, wird wiederum eine Energie aus dem UHF-Feld gewonnen bzw. es wird eine Signaldämpfung am UHF-Tag vorgenommen.

Es wird somit ein Verfahren aufgezeigt, welches ein UHF-Siegel bereitstellt, welches ohne optische Inspektion einer Person sicher gemacht werden kann, also eine Manipulation des Verschlusssystems bzw. des UHF-Siegels festgestellt werden kann. Somit kann identifiziert werden, ob das UHF-Siegel noch nicht geschlossen wurde und nur so in bzw. bei einem Verschlusskasten liegt. Hierdurch wäre es ansonsten möglich, lediglich das Siegel an sich zu identifizieren, ohne jedoch festzustellen, dass das Siegel ordnungsgemäß angebracht ist. Dieser Nachteil wird erfindungsgemäß überwunden.

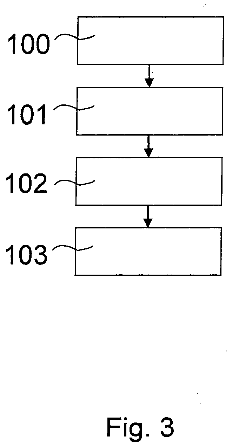

Fig. 3 zeigt ein schematisches Ablaufdiagramm eines Verfahrens zum Herstellen eines Sicherheitssiegels zum überprüfbaren Verschließen eines Gegenstands, aufweisend ein Bereitstellen 100 eines Siegelkörpers mit einer ersten Antenne oder einer Recheneinheit, wobei ein Ausformen 101 von zwei Verschlussstreifen vorgesehen ist, die sich aus dem Siegelkörper, aufweisend je einen Teil einer zweiten Antenne, welche an die Recheneinheit gekoppelt ist, erstrecken, wobei in Abhängigkeit eines Bereitstellens 102 mindestens eines Signals der ersten Antenne und/ oder der zweiten Antenne an die Recheneinheit festgestellt 103 wird, ob das Sicherheitssiegel verschlossen ist.

Der Fachmann erkennt hierbei, dass die vorgeschlagenen Verfahrensschritte auch weitere Teilschritte umfassen können. Insbesondere dient das vorgeschlagene Verfahren zur Bereitstellung eines Sicherheitssiegels gemäß Fig. 2.

## Patentansprüche

1. Sicherheitssiegel zum überprüfbaren Verschließen eines Gegenstands, aufweisend einen Siegelkörper mit einer erste Antenne und einer Recheneinheit, **dadurch gekennzeichnet, dass** sich aus dem Siegelkörper zwei Verschlussstreifen aufweisend je einen Teil einer zweiten Antenne, welche an die Recheneinheit gekoppelt ist, erstrecken, wobei in Abhängigkeit eines Bereitstellens mindestens eines Signals der ersten Antenne und/ oder der zweiten Antenne an die Recheneinheit feststellbar ist, ob das Sicherheitssiegel verschlossen ist.

2. Sicherheitssiegel nach Anspruch 1, **dadurch gekennzeichnet, dass** die zweite Antenne lediglich in einem offenen Zustand ein Signal erzeugt.

3. Sicherheitssiegel nach Anspruch 1 oder 2, **dadurch gekennzeichnet, dass** die erste und die zweite Antenne zueinander gegenpolig ausgestaltet sind.

4. Sicherheitssiegel nach einem der vorhergehenden Ansprüche,
**dadurch gekennzeichnet, dass** die Recheneinheit eingerichtet ist, bei einem Empfangen eines Signals der zweiten Antenne kein Signal der ersten Antenne entgegenzunehmen.

5. Sicherheitssiegel nach einem der vorhergehenden Ansprüche,
**dadurch gekennzeichnet, dass** die zweiten Antenne eingerichtet ist, das Signal der ersten Antenne im Wesentlichen zu eliminieren.

6. Sicherheitssiegel nach einem der vorhergehenden Ansprüche,
**dadurch gekennzeichnet, dass** bei einem Schließen des Sicherheitssiegels mittels der Verschlussstreifen die zweite Antenne im Vergleich zu einem geöffneten Zustand eine geringe Signalintensität erzeugt.

7. Sicherheitssiegel nach einem der vorhergehenden Ansprüche, **dadurch gekennzeichnet, dass** die zweite Antenne bei einem Durchtrennen im Wesentlichen kein Signal erzeugt.

8. Sicherheitssiegel nach einem der vorhergehenden Ansprüche,
**dadurch gekennzeichnet, dass** das Sicherheitssiegel als ein Verschlusssiegel, ein Kabelbinder-Verschlusssiegel oder eine Plombe ausgestaltet ist.

9. Sicherheitssiegel nach einem der vorhergehenden Ansprüche,
**dadurch gekennzeichnet, dass** die Recheneinheit als ein Mikroprozessor, ein Mikrocontroller, ein Elektronikbaustein und/ oder zumindest als ein Teil eines Transponders vorliegt.

10. Sicherheitssiegel nach einem der vorhergehenden Ansprüche,
**dadurch gekennzeichnet, dass** es sich bei den Antennen um Ultra-Hoch-Frequenz-Antennen handelt.

11. Sicherheitssiegel nach einem der vorhergehenden Ansprüche,
**dadurch gekennzeichnet, dass** der Siegelkörper eine Aufnahmeeinrichtung zur Fixierung der Verschlussstreifen aufweist.

12. Sicherheitssiegel nach einem der vorhergehenden Ansprüche,
**dadurch gekennzeichnet, dass** das Schließen des Sicherheitssiegels mechanisch mittels eines Ferrits und/ oder elektromagnetisch erfolgt.

13. Sicherheitssiegel nach einem der vorhergehenden Ansprüche,
**dadurch gekennzeichnet, dass** das Sicherheitssiegel nicht zerstörungsfrei zu öffnen ist.

14. Verfahren zum Herstellen eines Sicherheitssiegels zum überprüfbaren Verschließen eines Gegenstands, aufweisend:
- Bereitstellen (100) eines Siegelkörpers mit einer ersten Antenne und einer Recheneinheit, **dadurch gekennzeichnet, dass** folgende Schritte vorgesehen sind:
- Ausformen (101) von zwei Verschlussstreifen, die sich aus dem Siegelkörper aufweisend je einen Teil einer zweiten Antenne, welche an die Recheneinheit gekoppelt ist, erstrecken, wobei in Abhängigkeit eines
- Bereitstellens (102) mindestens eines Signals der ersten Antenne und/ oder der zweiten Antenne an die Recheneinheit, worauf festgestellt (103) wird, ob das Sicherheitssiegel verschlossen ist.

15. Computerprogrammprodukt mit Steuerbefehlen, welche das Verfahren gemäß Anspruch 14 implementieren.
